# FASCICULE DE BREVET EUROPEEN

(11) **EP 4 216 703 B1**
(45) Date de publication et mention de la délivrance du brevet: **01.04.2026**
(21) Numéro de dépôt: 21777506.3
(22) Date de dépôt: 14.09.2021
(51) Int. Cl.: A01B 69/00, G05D 1/00

(54) **PROCÉDÉ DE TRAVAIL D'UNE PARCELLE PAR AU MOINS DEUX ROBOTS AGRICOLES**
VERFAHREN ZUR BEARBEITUNG EINER LANDPARZELLE MIT MINDESTENS ZWEI LANDWIRTSCHAFTLICHEN ROBOTERN
METHOD FOR WORKING A PLOT OF LAND BY AT LEAST TWO AGRICULTURAL ROBOTS

(30) Priorité: 24.09.2020 FR 2009705
(43) Date de publication de la demande: 02.08.2023
(73) Titulaire: Kuhn SAS, 67700 Saverne (FR)
(72) Inventeur: HOELLINGER, Marie, 57720 RIMLING (FR); POTIER, Philippe, 67290 ZITTERSHEIM (FR); LABOUREY, Quentin, 67100 STRASBOURG (FR); JARRASSIER, Benoit, 67700 OTTERSTAHL (FR)
(74) Mandataire: Hager, Esther Evelyne
(86) Numéro de dépôt international: PCT/EP2021/075213
(87) Numéro de publication internationale: WO 2022/063639

(56) Documents cités:
- EP-A1- 3 508 045
- US-A1- 2007 233 374
- US-A1- 2018 364 739

## Description

La présente invention concerne le domaine du machinisme agricole et plus particulièrement du travail du sol ou des végétaux d'une parcelle agricole, et a pour objet un procédé de travail d'une parcelle automatiquement et simultanément par une flotte d'au moins deux machines ou robots agricoles, ainsi qu'un ensemble agricole pour réaliser ce procédé.

Dans le domaine agricole, il est connu que dans le cas du travail d'une parcelle par une flotte de plusieurs engins agricoles autonomes (robots), la répartition du travail au sein de la parcelle est cruciale pour garantir l'efficacité du système. De la même manière, il est vital d'éviter au maximum les collisions possibles entre les différents engins.

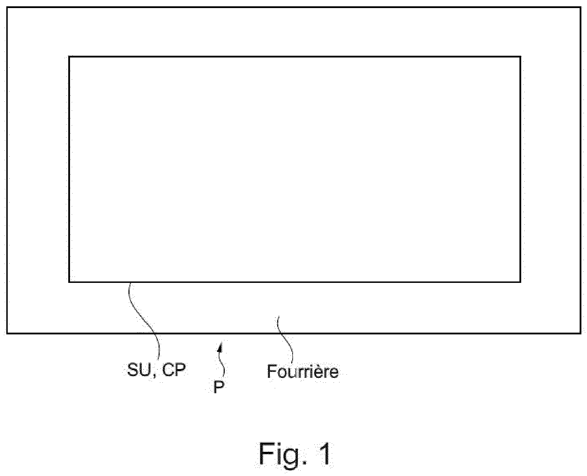

Typiquement, une parcelle P est divisée en un champ principal CP (surface utile SU exploitable optimalement) et une zone de fourrière qui borde ce champ principal sur toute ou partie de sa circonférence périphérique (voir [Fig.1][Fig.1] - fourrière sur tout le pourtour du champ). De manière classique, cette fourrière est présente au moins à chaque extrémité des rangs ou trajets de travail de la parcelle et est utilisée par les engins pour effectuer les demi-tours et plus généralement pour manœuvrer d'un rang à l'autre du champ principal.

De manière connue et habituelle, les engins robotisés autonomes d'une même flotte communiquent entre eux (par voie radiofréquence, directement ou via un système central) afin de connaitre constamment la position des autres engins. D'autres solutions de type maître-esclave (un robot esclave suit et reproduit le parcours d'un robot maître) existent également.

Or, ces solutions connues nécessitent des échanges bidirectionnels constants et donc une communication permanente entre les robots : il en résulte des besoins complexes en termes de flux de données et de connexions entre les engins et le réseau.

A titre alternatif, les solutions connues de type maitre-esclave imposent une dépendance du ou des robot(s) esclave(s) vis-à-vis du ou des robot(s) maître(s) : les deux types d'engins ne peuvent donc pas vraiment travailler de manière indépendante, mais uniquement en binômes ou en groupe, ce qui réduit l'efficacité. En outre, il faut à nouveau gérer le ou les robot(s) par le biais d'un lien de communication permanent.

Enfin, d'autres solutions préconisent de diviser la parcelle à travailler en zones de travail de largeur fixe correspond à la largeur de travail des robots agricoles mis en œuvre (chaque zone est travaillée en un passage) et d'affecter ces parcelles aux différents robots, ces parcelles étant affectées/réaffectées en temps réel en fonction de l'avancement des travaux en cours par les différents robots et de l'évolution de la situation. Une solution de ce type est divulguée par le document EP 3 508 045, US 2018/364739 A1 ou US 2019/0146513.

Dans cette dernière, lorsqu'un robot veut se rendre dans une nouvelle zone (après avoir fini sa tâche dans une zone donnée) en passant par la fourrière, ou veut faire un demi-tour dans la fourrière en extrémité de zone, et qu'un obstacle (notamment un autre robot) bloque son passage, alors ce robot en transit ou en sortie de zone soit attend que le trajet se dégage, soit recherche un itinéraire alternatif pour atteindre l'objectif ou effectuer sa manœuvre (choix de l'alternative la plus courte). Les zones ou rangs dont les portions de fourrières accolées en extrémité sont bloquées sont temporairement interdits de passage et ne sont pas autorisées quand un robot doit changer de zone.

Il résulte de toutes ces solutions connues, et notamment de la dernière, une gestion des passages en fourrière complexe dans le cas d'une flotte de plusieurs robots agricoles (priorisation, évitement des collisions, ...).

La présente invention a pour but de pallier ces inconvénients, et notamment de fournir une solution évitant au maximum la gestion des collisions et permettant une coordination efficace des différents robots sans nécessiter de communication entre eux.

A cet effet, l'invention a pour objet un procédé de travail d'une parcelle simultanément par une flotte d'au moins deux machines ou robots agricoles à fonctionnement autonome et indépendant, en accord avec des consignes et/ou des commandes transmises par un système central commun de gestion et de pilotage, ledit procédé consistant à subdiviser ladite parcelle à travailler, préalablement au début du travail de cette parcelle ou progressivement durant le travail de celle-ci, en au moins deux zones de travail distinctes, l'ensemble desdites zones de travail couvrant surfaciquement sensiblement la totalité de la surface exploitable ou utile de ladite parcelle, chaque zone de travail consistant en une fraction de parcelle en forme de bande avec à ses deux bouts opposés des extrémités respectives, et une zone de fourrière s'étendant le long des différentes extrémités voisines successives à chacun des deux bouts opposés desdites bandes, procédé caractérisé en ce qu'il consiste à subdiviser chaque zone de fourrière en des portions de fourrière dont chacune est située en regard et dans la continuité d'une des deux extrémités d'une des bandes formant zones de travail et à affecter au moins une fraction de portion de fourrière, temporairement et de manière exclusive, au robot qui soit est sur le point ou en train de traverser la portion de fourrière considérée, soit va débuter, est en train d'effectuer ou va achever le travail de la zone de travail associée à ladite portion de fourrière considérée, les actions et/ou déplacements d'au moins certains des autres robots étant éventuellement influencés par cette affectation temporaire exclusive, ce par l'intermédiaire dudit système central de gestion et de pilotage.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig.2] représente, pour une parcelle rectangulaire, une division du champ partielle en zones de travail avec une zone de fourrière sur tout le pourtour et subdivisée en portion ;
[Fig.3] représente la parcelle de la [Fig.2] après attribution avec alternance de zones de travail uniformes selon un même motif ou schéma répétitif du type A-B-C, A-B-C, ... ;
[Fig.4] représente la parcelle des figures 2 et 3 après subdivision du champ totale avec attribution alternée de zones de travail uniformes selon un motif ou schéma répétitif différent similaire à celui de la [Fig.3] et avec une bande (terminale) de taille différente (moins large) ;
[Fig.5] représente une parcelle avec subdivision du champ totale et avec attribution alternée de zones de travail uniformes selon le même motif ou schéma répétitif que celui de la [Fig.4] (type A-B-C, A-B-C,...), sans fourrière latérale (uniquement des fourrières au niveau des extrémités opposées des rangs) et avec une bande (terminale) de taille différente ;
[Fig.6] représente la parcelle de la [Fig.2] sur laquelle les principaux composants constitutifs d'un exemple d'ensemble agricole pour la réalisation du procédé selon l'invention (système central de gestion et de pilotage - engins robotisés autonomes de travail agricole) sont représentés, et,
[Fig.7] illustre une parcelle dont le champ principal est traité par quatre robots différents et montre une possible situation de conflit/collision entre ces derniers, gérée en accord avec l'invention (affectation exclusive de portions de fourrière).

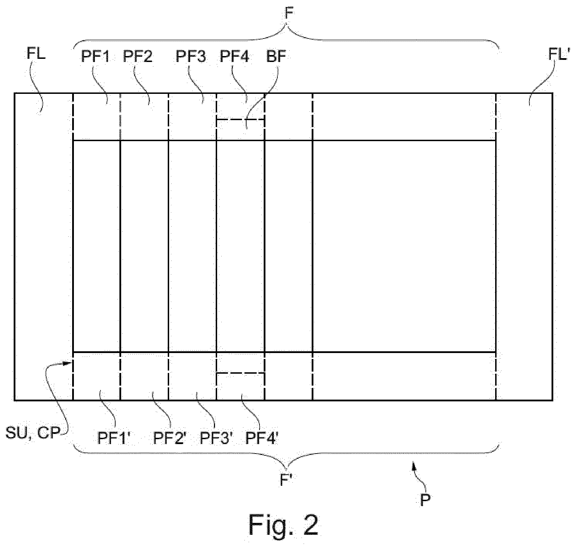

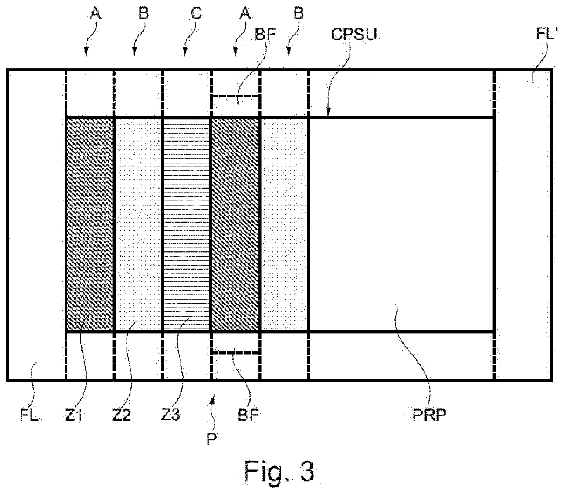

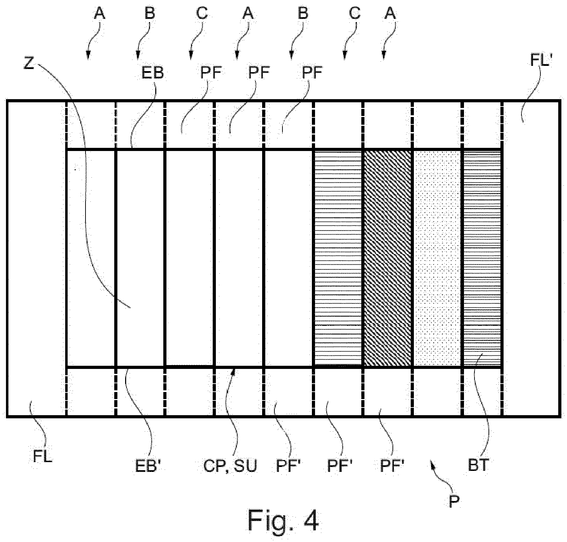

Comme le montrent les figures 2 à 6, l'invention concerne un procédé de travail d'une parcelle (P) simultanément par une flotte d'au moins deux machines ou robots agricoles (R1, R2, ..., Ri) à fonctionnement autonome et indépendant, en accord avec des consignes et/ou des commandes transmises par un système central commun de gestion et de pilotage (SC).

Ce procédé consiste à subdiviser ladite parcelle (P) à travailler, préalablement au début du travail de cette parcelle (P) ou progressivement durant le travail de celle-ci, en au moins deux zones de travail distinctes (Z1, Z2, ..., Zj), l'ensemble desdites zones de travail (Z1, Z2, ..., Zj) couvrant surfaciquement sensiblement la totalité de la surface exploitable ou utile (SU) de ladite parcelle (P) - également dénommée champ principal CP -, chaque zone de travail (Z1, Z2, ..., Zj) consistant en une fraction de parcelle en forme de bande avec à ses deux bouts opposés des extrémités (EB, EB') respectives, et une zone de fourrière (F, F') s'étendant le long des différentes extrémités voisines successives (EB ou EB') à chacun des deux bouts opposés desdites bandes (Z1, Z2, ..., Zj).

Ce procédé est caractérisé en ce qu'il consiste en outre à subdiviser chaque zone de fourrière (F, F') en des portions de fourrière (PF1, PF1'; PF2, PF2' ;... ; PFj, PFj') dont chacune est située en regard et dans la continuité d'une des deux extrémités (EB et EB') d'une des bandes formant zones de travail (Z1, Z2, ..., Zj) et à affecter au moins une fraction de portion de fourrière (PF1, PF1'; PF2, PF2' ;... ; PFj, PFj'), temporairement et de manière exclusive, au robot (R1, R2, ..., Ri) qui soit est sur le point ou en train de traverser la portion de fourrière (PF1, PF1'; PF2, PF2' ;... ; PFj, PFj') considérée, soit va débuter, est en train d'effectuer ou va achever le travail dans la zone de travail (Z1, Z2, ..., Zj) associée à ladite portion de fourrière (PF1, PF1'; PF2, PF2' ;... ; PFj, PFj') considérée, les actions et/ou déplacements, d'au moins certains des autres robots étant éventuellement influencés par cette affectation temporaire exclusive, ce par l'intermédiaire dudit système central de gestion et de pilotage.

Bien entendu, le procédé selon l'invention pourra aussi s'appliquer aux parties ou zones de fourrières latérales FL, FL' pouvant s'étendre de part et d'autre du champ principal CP, selon la direction des rangs, lorsque de telles parties de fourrières sont présentes. Chaque partie de fourrière latérale FL, FL' est alors traitée comme une portion de fourrière PF.

Ainsi, en réalisant par le biais du système central de gestion et de pilotage une attribution exclusive de portions de fourrière à certains robots agricoles, pendant des durées déterminées, l'invention permet de faciliter notablement la gestion de la flotte de robots qui sont actifs simultanément sur une même parcelle et plus particulièrement le traitement des potentielles collisions, en limitant les croisements entre robots. De plus, lesdits robots n'ont pas besoin de connaître les positions des autres robots et surtout ne nécessitent aucune communication entre eux.

De manière générale et dans le cadre de l'invention, une portion de fourrière (ou au moins une fraction d'une telle portion) est rendue temporairement exclusive pour un robot donné lorsque ce dernier en a besoin, au moins pendant la durée durant laquelle ce robot y réside. Cette attribution exclusive, avec interdiction d'accès pour les autres robots est préférentiellement au moins légèrement anticipée (avant l'accès effectif du robot dans la portion qui lui est exclusivement réservée) et peut résulter de l'application de règles variées en fonction du choix de l'utilisateur (priorisation, chronologique, dépendant du type de robot, ...).

En accord avec une première variante de mise en œuvre simple, le procédé peut consister à affecter temporairement et exclusivement une portion ou fraction de portion de fourrière (PF1, PF1'; PF2, PF2' ;... ; PFj, PFj') donnée au robot (R1, R2, ..., Ri) qui entre, ou est sur le point d'entrer, en premier dans ladite portion ou fraction de portion de fourrière considérée

En accord avec une seconde variante de mise en œuvre, il peut être prévu d'affecter temporairement et exclusivement une portion ou fraction de portion de fourrière (PF1, PF1'; PF2, PF2' ;... ; PFj, PFj') donnée à un robot (R1, R2, ..., Ri) spécifique en fonction d'une règle logique de priorisation prédéterminée, appliquée par le système central commun de gestion et de pilotage (SC). Ainsi, dans le cas de robots agricoles de gabarits différents, la priorité peut être donnée aux robots les plus gros.

Bien entendu, les deux portions de fourrière PF et PF' situées aux deux extrémités opposée EB et EB' d'une même zone de travail Z peuvent être attribuées momentanément et exclusivement à deux robots différents (celui affecté à la zone de travail Z effectuant par exemple un demi-tour dans une première portion, et l'autre robot - en transit entre deux zones - traversant l'autre portion).

Selon une caractéristique de l'invention, le procédé consiste, après affectation exclusive d'une portion de fourrière (PF1, PF1'; PF2, PF2' ;... ; PFj, PFj') donnée à un robot (R1, R2, ..., Ri) spécifique, par application d'une règle d'affectation préprogrammée au niveau du système central commun de gestion et de pilotage (SC), à coordonner et piloter en conséquence, pour autant que de besoin, le fonctionnement et le déplacement des autres robots en activité sur la parcelle (P), ce par le biais dudit système (SC). Ce pilotage des autres robots peut par exemple consister en une mise à jour des zones de déplacement momentanément interdites d'accès pour ceux parmi les autres robots susceptibles de transiter par la portion attribuée exclusivement.

La largeur de la fourrière (F, F') dépend de la largeur de la zone de travail associée, sa profondeur (dimension dans la direction longitudinale de da bande de travail associée), ainsi que la largeur des parties de fourrière latérales (FL, FL') pouvant être variables.

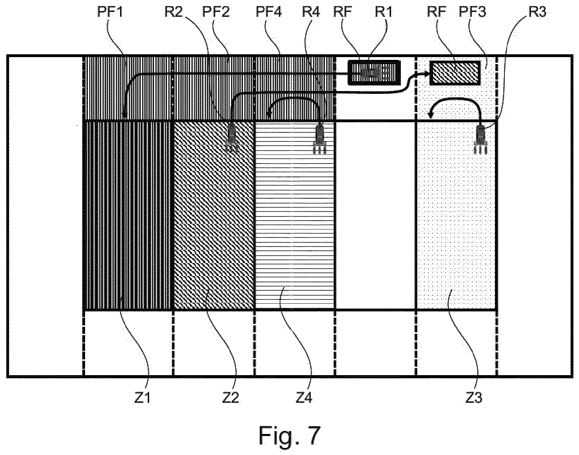

En particulier lorsque les portions de fourrières PF présentent une profondeur importante, l'affectation temporaire exclusive d'une portion de fourrière (PF1, PF1'; PF2, PF2' ;... ; PFj, PFj') à un robot (R1, R2, ..., Ri) donné spécifique, peut ne concerner qu'une bande fractionnaire (BF) de la portion de fourrière concernée, qui est directement attenante à l'extrémité de la zone de travail (EB, EB') concernée. Autrement dit la bande fractionnaire complémentaire de BF (qui complète BF pour former PFj) peut demeurer libre de circulation et d'accès (l'inverse peut également s'appliquer-BF libre). Selon une autre variante, ressortant de la [Fig.7], l'affectation temporaire exclusive d'une portion de fourrière (PF1, PF1'; PF2, PF2' ;... ; PFj, PFj') qu'une région fractionnaire (RF) de cette portion, située à l'intérieur de cette dernière, et pouvant par exemple servir de zone d'attente, de parking, de ravitaillement, de maintenance, etc ..., pour un robot (R1) donné.

Conformément à une caractéristique de l'invention, les affectations temporaires exclusives des portions de fourrières (PF1, PF1'; PF2, PF2' ;... ; PFj, PFj') aux différents robots (R1, R2, ..., Ri) sont avantageusement réalisées progressivement, au fur et à mesure de l'avancement du travail des zones de travail (Z1, Z2, ..., Zj) de la parcelle (P) considérée par les robots.

Ainsi, et en fonction de l'option retenue, ces zones de travail (Z1, Z2, ..., Zj) peuvent soit être toutes établies avant le début du travail de la parcelle (P) concernée (pré-découpage de la parcelle), soit être définies graduellement en fonction de l'avancement du travail dans la parcelle (P). Elles peuvent (ou non) toutes présenter la même largeur Lz (notamment lorsque les robots sont identiques), sauf éventuellement une bande terminale ou de finition BT de plus faible largeur.

Lorsque la parcelle (P) comporte une fourrière périphérique entourante, laquelle comprend les deux zones de fourrière (F, F') terminales longeant les extrémités (EB, EB') des zones de travail (Z1, Z2, ..., Zj) ainsi que deux zones de fourrière latérales (FL, FL') reliant les deux zones de fourrière extrêmales précitées, il peut être prévu d'affecter temporairement et exclusivement une partie ou la totalité de chacune de ces deux zones de fourrière latérales (FL, FL') au robot (R1, R2, ..., Ri) qui entre en premier dans la zone de fourrière latérale considérée.

Selon une caractéristique avantageuse de l'invention, il peut être prévu d'attribuer ou d'affecter, de manière temporaire, chaque zone de travail (Z1, Z2, Zj) exclusivement à un des robots agricoles (R1, R2, Ri), au moins pendant la phase de travail considéré (à effectuer par ce robot). La largeur (Lz) de la majorité des zones de travail (Z1, Z2, Zj) est avantageusement supérieure ou égale à la largeur de travail (Lr) du robot agricole (R1, R2, Ri) qui lui est exclusivement affecté, préférentiellement égale à un multiple entier de celle-ci.

En outre, l'affectation exclusive, en cours de réalisation du travail de la parcelle (P), des zones de travail (Z1, Z2, Zj) restant encore à travailler, aux différents robots agricoles (R1, R2, Ri), est réalisée progressivement, ce en fonction de l'achèvement des travaux en cours dans les différentes zones de travail par les robots agricoles qui leur ont été respectivement affectés.

De plus, après une affectation initiale d'une première zone de travail exclusive à chaque robot agricole, les affectations suivantes, à un instant donné au cours de réalisation du travail de la parcelle (P), des futures zones de travail, formant la partie restant encore à travailler (PRP) de ladite parcelle (P), aux différents robots agricoles peuvent s'effectuer progressivement en fonction de l'achèvement des travaux de travail en cours dans les différentes zones de travail par les robots agricoles qui leur ont été respectivement affectés.

Avantageusement, toutes les zones de travail (Z1, Z2, Zj) sont attribuées aux différents robots agricoles (R1, R2, Ri), avec une affectation exclusive d'un robot par zone, avant le travail de la parcelle (P) ou au début de celui-ci, une possible réattribution des zones de travail restant à travailler, entre les différents robots agricoles considérés, pouvant intervenir à un instant déterminé au cours de la réalisation du travail de la parcelle (P), ce en fonction de l'évolution du comportement, de la disponibilité et/ou de l'état des différents robots, ou encore de l'avancement réel ou prévisible des travaux de travail dans les zones de travail encore soumises à l'instant précité au travail par les robots respectifs qui leur ont été exclusivement affectés.

Avantageusement, la subdivision de la parcelle (P) et l'attribution des zones de travail exclusives (Z1, Z2, Zj) aux différents robots agricoles (R1, R2, Ri) tient compte d'une minimisation des croisements desdits robots au niveau de la ou des fourrière(s) (F) lors de changements de zones de travail, l'affectation exclusive d'une zone de travail (Z1, Z2, Zj) donnée à un robot spécifique (R1, R2, Ri) entrainant soit une affectation temporaire exclusive, soit au moins une réservation prioritaire, pour ledit robot spécifique, de la ou des portions de fourrière s'étendant en regard et dans la continuité d'une des deux extrémités (EB et EB') de la zone de travail en forme de bande (Z1, Z2, ..., Zj).

A l'instar des zones de travail exclusives, des portions de fourrière voisines peuvent ne pas être directement aboutantes.

La définition, l'attribution exclusive et la gestion du travail dans de telles zones de travail peuvent par exemple être réalisée en accord avec le procédé décrit dans la demande de brevet français n°FR2009696 déposée ce jour au nom de la demanderesse.

Un exemple de situation relativement complexe de gestion de possible collision/ conflit est illustré sur la [Fig.7]. Dans cet exemple, R1 et R2 sont tous deux dans une situation de futur déplacement de transfert, R1 voulant quitter sa zone de parking (RF) pour rejoindre une zone de travail (Z1) qui lui a été attribuée et (R2) voulant quitter la zone de travail (Z2) qu'il vient de terminer pour rejoindre une zone de parking (RF) située dans la portion de fourrière (PF3) s'étendant dans la continuité de la zone de travail (Z3) travaillée par le robot (R3). La zone de travail (Z4) est quant à elle travaillée par le robot (R4) et les robots (R3) et (R4) sont sur le point de faire demi-tour dans les portions de fourrières (PF3 et PF4).Dans ce contexte et cette configuration, il peut être décidé que le premier robot qui bouge a la priorité. La figure montre que le robot (R1) a été le premier à bouger et toute les portions de fourrières (PF1, PF2 et PF4) qu'il doit traverser pour rejoindre (Z1) lui sont temporairement et exclusivement réservées. Ainsi, dans un premier temps, (R2) et (R4) sont en attente dans leurs zones de travail respectives. Par contre, R3 peut faire son demi-tour car la portion de fourrière (PF3) ne doit pas être parcourue par (R1). (PF4) étant réservée temporairement pour la traversée de (R1), (R4) devra attendre que (R1) soit passé avant de faire son demi-tour. Toutefois, il devrait pouvoir le faire avant que (R2) ne rejoigne (RF) dans (PF3), car (PF4) sera libérée avant (PF2) suite au passage de (R1), à moins qu'une logique autre que la priorisation temporelle ne soit appliqué dans ce cas (par exemple : importance ou taille du robot, type de tâche à accomplir, ...).

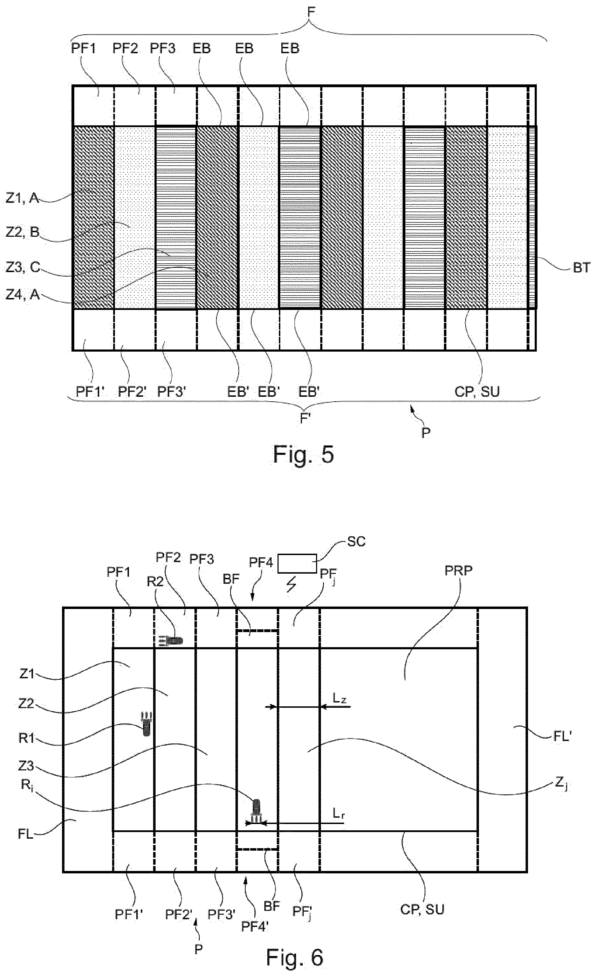

L'invention vise également, comme le montre la [Fig.6], un ensemble agricole pour le travail automatisé de parcelles (P) comprenant une flotte d'au moins deux machines ou robots agricoles (R1, R2, ..., Ri) mobiles, équipés d'outils de travail adéquats, à fonctionnement autonome et indépendant, et un système central commun de gestion et de pilotage (SC) apte à communiquer avec lesdits robots en vue de leur transmettre des consignes et/ou des commandes et de recevoir en retour des informations de fonctionnement et/ou d'état desdits robots.

Chaque robot est pourvu d'un dispositif de positionnement ou de localisation par satellites et ledit système central de gestion et de pilotage (SC) comprend des moyens permettant de subdiviser ladite parcelle (P) à travailler, préalablement au début du travail de cette parcelle (P) et/ou progressivement durant le travail de celle-ci, en au moins deux zones de travail distinctes (Z1, Z2, ..., Zj).

L'ensemble desdites zones de travail couvre surfaciquement sensiblement la totalité de la parcelle. Chaque zone de travail (Z1, Z2, ..., Zj) consiste en une fraction de parcelle en forme de bande avec à ses deux bouts opposés des extrémités (EB, EB') respectives, et une zone de fourrière (F, F') s'étend le long des différentes extrémités voisines successives (EB ou EB'), à chacun des deux bouts opposés desdites bandes (Z1, Z2, ... , Zj). Le cas échéant, des zones de fourrières latérales (FL, FL') peuvent être présentes.

Conformément à l'invention, le système central commun de gestion et de pilotage (SC) comprend des moyens (unité de traitement et programmes de calcul et de commande) permettant de subdiviser chaque zone de fourrière (F, F') en des portions de fourrière (PF1, PF1'; PF2, PF2' ;... ; PFj, PFj') dont chacune est située en regard et dans la continuité d'une des deux extrémités (EB et EB') d'une des bandes formant zones de travail (Z1, Z2, ..., Zj) et d'affecter au moins une fraction de portion de fourrière (PF1, PF1'; PF2, PF2' ;... ; PFj, PFj'), temporairement et de manière exclusive, au robot (R1, R2, ..., Ri) qui soit est sur le point ou en train de traverser la portion de fourrière (PF1, PF1'; PF2, PF2' ;... ; PFj, PFj') considérée, soit va débuter, est en train d'effectuer ou va achever le travail de la zone de travail (Z1, Z2, ..., Zj) associée à ladite portion de fourrière (PF1, PF1'; PF2, PF2' ;... ; PFj, PFj') considérée.

Préférentiellement, cet ensemble met en œuvre le procédé décrit ci-dessus pour assurer la gestion de la flotte de robots (R1, R2, Ri) durant le travail d'une parcelle (P).

Bien entendu, l'invention n'est pas limitée aux modes de réalisation décrits et représentés aux dessins annexés. Des modifications restent possibles, notamment du point de vue de la constitution des divers éléments tant que le domaine de protection de l'invention tel que défini par les revendications indépendantes est respecté.

## Revendications

1. Procédé de travail d'une parcelle (P) simultanément par une flotte d'au moins deux machines ou robots agricoles (R1, R2, ..., Ri) à fonctionnement autonome et indépendant, en accord avec des consignes et/ou des commandes transmises par un système central commun de gestion et de pilotage (SC), ledit procédé consistant à subdiviser ladite parcelle (P) à travailler, préalablement au début du travail de cette parcelle (P) ou progressivement durant le travail de celle-ci, en au moins deux zones de travail distinctes (Z1, Z2, ..., Zj), l'ensemble desdites zones de travail (Z1, Z2, ..., Zj) couvrant surfaciquement sensiblement la totalité de la surface exploitable ou utile (SU) de ladite parcelle (P), chaque zone de travail (Z1, Z2, ..., Zj) consistant en une fraction de parcelle en forme de bande avec à ses deux bouts opposés des extrémités (EB, EB') respectives, et une zone de fourrière (F, F') s'étendant le long des différentes extrémités voisines successives (EB ou EB') à chacun des deux bouts opposés desdites bandes (Z1, Z2, ..., Zj),
procédé **caractérisé en ce qu'**il consiste en outre à subdiviser chaque zone de fourrière (F, F') en des portions de fourrière (PF1, PF1'; PF2, PF2' ;... ; PFj, PFj') dont chacune est située en regard et dans la continuité d'une des deux extrémités (EB et EB') d'une des bandes formant zones de travail (Z1, Z2, ..., Zj) et à affecter au moins une fraction de portion de fourrière (PF1, PF1'; PF2, PF2' ;... ; PFj, PFj'), temporairement et de manière exclusive, au robot (R1, R2, ..., Ri) qui soit est sur le point ou en train de traverser la portion de fourrière (PF1, PF1'; PF2, PF2' ;... ; PFj, PFj') considérée, soit va débuter, est en train d'effectuer ou va achever le travail dans la zone de travail (Z1, Z2, ..., Zj) associée à ladite portion de fourrière (PF1, PF1'; PF2, PF2' ; ... ; PFj, PFj') considérée, les actions et/ou déplacements d'au moins certains des autres robots étant éventuellement influencés par cette affectation temporaire exclusive, ce par l'intermédiaire dudit système central de gestion et de pilotage.

2. Procédé selon la revendication 1, **caractérisé en ce qu'**il consiste à affecter temporairement et exclusivement une portion ou fraction de portion de fourrière (PF1, PF1'; PF2, PF2' ;... ; PFj, PFj') donnée à un robot (R1, R2, ..., Ri) spécifique en fonction d'une règle logique de priorisation prédéterminée, appliquée par le système central commun de gestion et de pilotage (SC).

3. Procédé selon l'une quelconque des revendications 1 ou 2, **caractérisé en ce qu'**il consiste, après affectation exclusive d'une portion de fourrière (PF1, PF1'; PF2, PF2' ;... ; PFj, PFj') donné à un robot (R1, R2, ..., Ri) spécifique, par application d'une règle d'affectation préprogrammée au niveau du système central commun de gestion et de pilotage (SC), à coordonner et piloter en conséquence, pour autant que de besoin, le fonctionnement et le déplacement des autres robots en activité sur la parcelle (P), ce par le biais dudit système (SC).

4. Procédé selon l'une quelconque des revendications 1 à 3, **caractérisé en ce que** l'affectation temporaire exclusive d'une portion de fourrière (PF1, PF1'; PF2, PF2' ;... ; PFj, PFj') à un robot (R1, R2, ..., Ri) donné spécifique, ne concerne qu'une bande fractionnaire (BF) de la portion de fourrière concernée, qui est directement attenante à l'extrémité de la zone de travail (EB, EB') concernée.

5. Procédé selon l'une quelconque des revendications 1 à 4, **caractérisé en ce que** les affectations temporaires exclusives des portions de fourrières (PF1, PF1'; PF2, PF2' ;... ; PFj, PFj') aux différents robots (R1, R2, ..., Ri) sont réalisées progressivement, au fur et à mesure de l'avancement du travail des zones de travail (Z1, Z2, ..., Zj) de la parcelle (P) considérée par les robots.

6. Procédé selon l'une quelconque des revendications 1 à 5, **caractérisé en ce qu'**il consiste à affecter de manière temporaire chaque zone de travail (Z1, Z2, Zj) exclusivement à un des robots agricoles (R1, R2, Ri), au moins pendant la phase de travail considéré, la largeur (Lz) de la majorité des zones de travail (Z1, Z2, Zj) étant supérieure ou égale à la largeur de travail (Lr) du robot agricole (R1, R2, Ri) qui lui est exclusivement affecté, préférentiellement égale à un multiple entier de celle-ci, et **en ce que** l'affectation exclusive, en cours de réalisation du travail de la parcelle (P), des zones de travail (Z1, Z2, Zj) restant encore à travailler, aux différents robots agricoles (R1, R2, Ri), est réalisée progressivement, ce en fonction de l'achèvement des travaux en cours dans les différentes zones de travail par les robots agricoles qui leur ont été respectivement affectés.

7. Procédé selon la revendication 6, **caractérisé en ce que** toutes les zones de travail (Z1, Z2, Zj) sont attribuées aux différents robots agricoles (R1, R2, Ri), avec une affectation exclusive d'un robot par zone, avant le travail de la parcelle (P) ou au début de celui-ci, une réattribution des zones de travail restant à travailler, entre les différents robots agricoles considérés, pouvant intervenir à un instant déterminé au cours de la réalisation du travail de la parcelle (P), ce en fonction de l'évolution du comportement, de la disponibilité et/ou de l'état des différents robots, ou encore de l'avancement réel ou prévisible des travaux de travail dans les zones de travail encore soumises à l'instant précité au travail par les robots respectifs qui leur ont été exclusivement affectés.

8. Procédé selon l'une quelconque des revendications 1 à 7, **caractérisé en ce que** la subdivision de la parcelle (P) et l'attribution des zones de travail exclusives (Z1, Z2, Zj) aux différents robots agricoles (R1, R2, Ri) tient compte d'une minimisation des croisements desdits robots au niveau de la ou des fourrière(s) (F) lors de changements de zones de travail, l'affectation exclusive d'une zone de travail (Z1, Z2, Zj) donnée à un robot spécifique (R1, R2, Ri) entrainant soit une affectation temporaire exclusive, soit au moins une réservation prioritaire, pour ledit robot spécifique, de la ou des portions de fourrière s'étendant en regard et dans la continuité d'une des deux extrémités (EB et EB') de la zone de travail en forme de bande (Z1, Z2, ..., Zj).

9. Ensemble agricole pour le travail automatisé de parcelles (P) comprenant une flotte d'au moins deux machines ou robots agricoles (R1, R2, ..., Ri) mobiles, équipés d'outils de travail adéquats, à fonctionnement autonome et indépendant, et un système central commun de gestion et de pilotage (SC) apte à communiquer avec lesdits robots en vue de leur transmettre des consignes et/ou des commandes et de recevoir en retour des informations de fonctionnement et/ou d'état desdits robots, chaque robot étant en outre pourvu d'un dispositif de positionnement ou de localisation par satellites, ledit système central de gestion et de pilotage (SC) comprenant des moyens permettant de subdiviser ladite parcelle (P) à travailler, préalablement au début du travail de cette parcelle (P) et/ou progressivement durant le travail de celle-ci, en au moins deux zones de travail distinctes (Z1, Z2, ..., Zj), l'ensemble desdites zones de travail couvrant surfaciquement sensiblement la totalité de la parcelle, chaque zone de travail (Z1, Z2, ..., Zj) consistant en une fraction de parcelle en forme de bande avec à ses deux bouts opposés des extrémités (EB, EB') respectives, et une zone de fourrière (F, F') s'étendant le long des différentes extrémités voisines successives (EB ou EB') à chacun des deux bouts opposés desdites bandes (Z1, Z2, ..., Zj),
ensemble **caractérisé en ce que** le système central commun de gestion et de pilotage (SC) comprend en outre des moyens permettant de subdiviser chaque zone de fourrière (F, F') en des portions de fourrière (PF1, PF1'; PF2, PF2' ;... ; PFj, PFj') dont chacune est située en regard et dans la continuité d'une des deux extrémités (EB et EB') d'une des bandes formant zones de travail (Z1, Z2, ..., Zj) et d'affecter au moins une fraction de portion de fourrière (PF1, PF1'; PF2, PF2' ;... ; PFj, PFj'), temporairement et de manière exclusive, au robot (R1, R2, ..., Ri) qui soit est sur le point ou en train de traverser la portion de fourrière (PF1, PF1'; PF2, PF2' ;... ; PFj, PFj') considérée, soit va débuter, est en train d'effectuer ou va achever le travail de la zone de travail (Z1, Z2, ..., Zj) associée à ladite portion de fourrière (PF1, PF1'; PF2, PF2' ;... ; PFj, PFj') considérée.

10. Ensemble selon la revendication 9, **caractérisé en ce qu'**il met en oeuvre le procédé selon l'une quelconque des revendications 1 à 8 pour assurer la gestion de la flotte de robots (R1, R2, Ri) durant le travail d'une parcelle (P).

## Patentansprüche

1. Verfahren zur gleichzeitigen Bearbeitung einer Parzelle (P) durch eine Flotte von mindestens zwei landwirtschaftlichen Maschinen oder Robotern (R1, R2, ..., Ri) mit autonomem und unabhängigem Betrieb in Übereinstimmung mit Anweisungen und/oder Befehlen, die von einem gemeinsamen zentralen Verwaltungs- und Steuerungssystem (SC) übertragen werden, wobei das Verfahren darin besteht, die zu bearbeitende Parzelle (P) vor Beginn der Bearbeitung dieser Parzelle (P) oder schrittweise während der Bearbeitung derselben in mindestens zwei getrennte Arbeitsbereiche (Z1, Z2, ..., Zj) zu unterteilen, wobei die Gesamtheit der Arbeitsbereiche (Z1, Z2, ..., Zj) flächenmäßig im Wesentlichen die gesamte bewirtschaftbare oder nutzbare Fläche (SU) der Parzelle (P) abdeckt, wobei jeder Arbeitsbereich (Z1, Z2, ..., Zj) aus einem streifenförmigen Teilstück der Parzelle besteht, mit jeweils einem Ende (EB, EB') an seinen beiden gegenüberliegenden Enden und einem Vorgewende (F, F'), das sich entlang der verschiedenen aufeinanderfolgenden benachbarten Enden (EB oder EB') an jedem der beiden gegenüberliegenden Enden der Streifen (Z1, Z2, ..., Zj) erstreckt,
Verfahren, **dadurch gekennzeichnet, dass** es außerdem darin besteht, jedes Vorgewende (F, F') in Vorgewendeabschnitte (PF1, PF1'; PF2, PF2'; ...; PFj, PFj') unterzuteilen, von denen jeder sich gegenüber und in der Verlängerung eines der beiden Enden (EB und EB') eines der die Arbeitsbereiche (Z1, Z2, ..., Zj) bildenden Streifen befindet, und mindestens einen Teil eines Vorgewendeabschnitts (PF1, PF1'; PF2, PF2'; ...; PFj, PFj') vorübergehend und ausschließlich dem Roboter (R1, R2, ..., Ri) zuzuweisen, der entweder kurz davor ist oder gerade dabei ist, den Vorgewendeabschnitt (PF1, PF1'; PF2, PF2'; ...; PFj, PFj') zu überqueren, oder die Arbeit in dem mit dem betreffenden Vorgewendeabschnitt (PF1, PF1'; PF2, PF2'; ...; PFj, PFj') verbundenen Arbeitsbereich (Z1, Z2, ..., Zj) beginnen, ausführen oder beenden wird, wobei die Aktionen und/oder Bewegungen zumindest einiger der anderen Roboter möglicherweise durch diese vorübergehende ausschließliche Zuweisung beeinflusst werden, und zwar über das genannte zentrale Verwaltungs- und Steuerungssystem.

2. Verfahren nach Anspruch 1, **dadurch gekennzeichnet, dass** es darin besteht, vorübergehend und ausschließlich einen Teil oder Bruchteil eines Vorgewendeabschnitts (PF1, PF1'; PF2, PF2'; ...; PFj, PFj') einem bestimmten Roboter (R1, R2, ..., Ri) zuzuweisen, basierend auf einer vorbestimmten logischen Priorisierungsregel, die vom gemeinsamen zentralen Verwaltungs- und Steuerungssystem (SC) angewendet wird.

3. Verfahren nach einem der Ansprüche 1 oder 2, **dadurch gekennzeichnet, dass** es darin besteht, nach der ausschließlichen Zuweisung eines Vorgewendeabschnitts (PF1, PF1'; PF2, PF2'; ...; PFj, PFj') einem bestimmten Roboter (R1, R2, ..., Ri) durch Anwendung einer vorprogrammierten Zuweisungsregel auf der Ebene des gemeinsamen zentralen Verwaltungs- und Steuerungssystems (SC), den Betrieb und die Bewegung der anderen auf der Parzelle (P) aktiven Roboter entsprechend zu koordinieren und zu steuern, soweit dies erforderlich ist, und zwar über das genannte System (SC).

4. Verfahren nach einem der Ansprüche 1 bis 3, **dadurch gekennzeichnet, dass** die vorübergehende ausschließliche Zuweisung eines Vorgewendeabschnitts (PF1, PF1'; PF2, PF2'; ...; PFj, PFj') einem bestimmten spezifischen Roboter (R1, R2, ..., Ri) nur einen Teilstreifen (BF) des betreffenden Vorgewendeabschnitts betrifft, der direkt an das Ende des betreffenden Arbeitsbereichs (EB, EB') angrenzt.

5. Verfahren nach einem der Ansprüche 1 bis 4, **dadurch gekennzeichnet, dass** die vorübergehenden ausschließlichen Zuweisungen der Vorgewendeabschnitte (PF1, PF1'; PF2, PF2'; ...; PFj, PFj') an die verschiedenen Roboter (R1, R2, ..., Ri) schrittweise vorgenommen werden, entsprechend dem Fortschreiten der Arbeit in den Arbeitsbereichen (Z1, Z2, ..., Zj) der von den Robotern betrachteten Parzelle (P).

6. Verfahren nach einem der Ansprüche 1 bis 5, **dadurch gekennzeichnet, dass** es darin besteht, jeden Arbeitsbereich (Z1, Z2, Zj) vorübergehend ausschließlich einem der landwirtschaftlichen Roboter (R1, R2, Ri) zuzuweisen, zumindest während der betreffenden Arbeitsphase, wobei die Breite (Lz) der meisten Arbeitsbereiche (Z1, Z2, Zj) größer oder gleich der Arbeitsbreite (Lr) des ihr ausschließlich zugewiesenen landwirtschaftlichen Roboters (R1, R2, Ri) ist, vorzugsweise gleich einem ganzzahligen Vielfachen davon, und dass die ausschließliche Zuweisung der noch zu bearbeitenden Arbeitsbereiche (Z1, Z2, Zj) während der Bearbeitung der Parzelle (P) an die verschiedenen landwirtschaftlichen Roboter (R1, R2, Ri) schrittweise erfolgt, und zwar entsprechend der Fertigstellung der laufenden Arbeiten in den verschiedenen Arbeitsbereichen durch die ihnen jeweils zugewiesenen landwirtschaftlichen Roboter.

7. Verfahren nach Anspruch 6, **dadurch gekennzeichnet, dass** alle Arbeitsbereiche (Z1, Z2, Zj) den verschiedenen landwirtschaftlichen Robotern (R1, R2, Ri) zugewiesen werden, wobei vor oder zu Beginn der Bearbeitung der Parzelle (P) jedem Roboter ausschließlich ein Bereich zugewiesen wird, wobei zu einem bestimmten Zeitpunkt während der Bearbeitung der Parzelle (P) eine Neuzuweisung der noch zu bearbeitenden Arbeitsbereiche zwischen den verschiedenen landwirtschaftlichen Robotern erfolgen kann, und zwar in Abhängigkeit von der Entwicklung des Verhaltens, der Verfügbarkeit und/oder dem Zustand der verschiedenen Roboter oder auch vom tatsächlichen oder vorhersehbaren Fortschritt der Arbeiten in den Arbeitsbereichen, die zu dem oben genannten Zeitpunkt noch von den ihnen ausschließlich zugewiesenen jeweiligen Robotern bearbeitet werden.

8. Verfahren nach einem der Ansprüche 1 bis 7, **dadurch gekennzeichnet, dass** die Aufteilung der Parzelle (P) und die Zuweisung der ausschließlichen Arbeitsbereiche (Z1, Z2, Zj) an die verschiedenen landwirtschaftlichen Roboter (R1, R2, Ri) eine Minimierung der Kreuzungen der genannten Roboter auf Höhe der Vorgewende (F) beim Wechsel der Arbeitsbereiche berücksichtigt, wobei die ausschließliche Zuweisung eines Arbeitsbereichs (Z1, Z2, Zj) einem bestimmten Roboter (R1, R2, Ri) zugewiesen wird, was entweder zu einer vorübergehenden ausschließlichen Zuweisung oder zumindest zu einer vorrangigen Reservierung des oder der Vorgewendeabschnitte für den genannten bestimmten Roboter führt, die sich gegenüber und in der Verlängerung eines der beiden Enden (EB und EB') des streifenförmigen Arbeitsbereichs (Z1, Z2, ..., Zj) erstrecken.

9. Landwirtschaftliche Anlage für die automatisierte Bearbeitung von Parzellen (P), bestehend aus einer Flotte von mindestens zwei landwirtschaftlichen Maschinen oder Robotern (R1, R2, ..., Ri), die mit geeigneten Arbeitsgeräten ausgestattet sind, autonom und unabhängig arbeiten, und ein gemeinsames zentrales Verwaltungs- und Steuerungssystem (SC), das mit den genannten Robotern kommunizieren kann, um ihnen Anweisungen und/oder Befehle zu übermitteln und im Gegenzug Informationen über den Betrieb und/oder den Status der genannten Roboter zu empfangen, wobei jeder Roboter außerdem mit einer Vorrichtung zur Positionierung oder Ortung mittels Satelliten ausgestattet ist, wobei das zentrale Verwaltungs- und Steuerungssystem (SC) Mittel umfasst, die es ermöglichen, die zu bearbeitende Parzelle (P) vor Beginn der Bearbeitung dieser Parzelle (P) und/oder schrittweise während der Bearbeitung derselben in mindestens zwei getrennte Arbeitsbereiche (Z1, Z2, ..., Zj) unterzuteilen, wobei die Gesamtheit der genannten Arbeitsbereiche flächenmäßig im Wesentlichen die gesamte Parzelle abdeckt, jeder Arbeitsbereich (Z1, Z2, ..., Zj) aus einem streifenförmigen Teil der Parzelle mit jeweils einem Ende (EB, EB') an den beiden gegenüberliegenden Enden besteht, und ein Vorgewende (F, F') sich entlang der verschiedenen aufeinanderfolgenden benachbarten Enden (EB oder EB') an jedem der beiden gegenüberliegenden Enden der Streifen (Z1, Z2, ..., Zj) erstreckt,
Anlage, **dadurch gekennzeichnet, dass** das gemeinsame zentrale Verwaltungs- und Steuerungssystem (SC) außerdem Mittel umfasst, mit denen jedes Vorgewende (F, F') in Vorgewendeabschnitte (PF1, PF1'; PF2, PF2'; ...; PFj, PFj') unterteilen kann, von denen jeder gegenüber und in der Verlängerung eines der beiden Enden (EB und EB') eines der die Arbeitsbereiche (Z1, Z2, ..., Zj) bildenden Streifen liegt, und mindestens einen Teil eine Vorgewendeabschnitte (PF1, PF1'; PF2, PF2'; ...; PFj, PFj') vorübergehend und ausschließlich dem Roboter (R1, R2, ..., Ri) zuzuweisen, der entweder im Begriff ist oder gerade dabei ist, den betreffenden Vorgewendeabschnitt (PF1, PF1'; PF2, PF2'; ...; PFj, PFj') zu überqueren, oder die Arbeit in dem mit dem betreffenden Vorgewendeabschnitt (PF1, PF1'; PF2, PF2'; ...; PFj, PFj') verbundenen Arbeitsbereich (Z1, Z2, ..., Zj) beginnen, ausführen oder beenden wird.

10. Anlage nach Anspruch 9, **dadurch gekennzeichnet, dass** sie das Verfahren nach einem der Ansprüche 1 bis 8 anwendet, um die Verwaltung der Roboterflotte (R1, R2, Ri) während der Bearbeitung einer Parzelle (P) sicherzustellen.

## Claims

1. Method for working a plot of land (P) simultaneously by a fleet of at least two agricultural machines or robots (R1, R2, ..., Ri) operating autonomously and independently, in accordance with instructions and/or commands transmitted by a common central management and control system (SC), the method consisting in subdividing the plot of land (P) to be worked, prior to starting working on this plot of land (P) or progressively during work thereon, into at least two distinct work areas (Z1, Z2, ..., Zj), the whole work areas (Z1, Z2, ..., Zj) covering substantially the entire exploitable or usable surface area (SU) of the plot of land (P), each work area (Z1, Z2, ..., Zj) consisting of a fraction of plot of land in the form of a strip with respective extremities (EB, EB') at the two opposite ends thereof, and a headland area (F, F') extending along the various successive adjacent extremities (EB or EB') at each of the two opposite ends of the strips (Z1, Z2, ..., Zj),
method **characterised in that** it further consists in subdividing each headland area (F, F') into headland portions (PF1, PF1'; PF2, PF2'; ...; PFj, PFj'), each of which facing and being located in the continuation of one of the two extremities (EB and EB') of one of the strips forming work areas (Z1, Z2, ..., Zj), and assigning at least a fraction of a headland portion (PF1, PF1'; PF2, PF2'; ...; PFj, PFj'), temporarily and exclusively, to the robot (R1, R2; ..., Ri) that either is about to pass or is in the process of passing through the considered headland portion (PF1, PF1'; PF2, PF2'; ...; PFj, PFj'), or is going to start, is in the process of completing or going to complete work in the work area (Z1, Z2, ..., Zj) associated to the considered headland portion (PF1, PF1'; PF2, PF2'; ...; PFj, PFj'), the actions and/or displacements of at least some of the other robots possibly being influenced by this temporary exclusive assignment, via the central management and control system.

2. Method according to claim 1, **characterised in that** it consists in assigning temporarily and exclusively a given headland portion or a fraction of a headland portion (PF1, PF1'; PF2, PF2'; ...; PFj, PFj') to a specific robot (R1, R2, ..., Ri) according to a predetermined prioritisation logic rule, applied by the common central management and control system (SC).

3. Method according to any one of claims 1 or 2, **characterised in that** it consists, after exclusive assignment of a given headland portion (PF1, PF1'; PF2, PF2'; ...; PFj, PFj') to a specific robot (R1, R2, ..., Ri), by application of a preprogrammed assignment rule in the common central management and control system (SC), in coordinating and controlling accordingly, as far as required, the operation and displacement of the other robots working on the plot of land (P), via the system (SC).

4. Method according to any one of claims 1 to 3, **characterised in that** the temporary exclusive assignment of a headland portion (PF1, PF1'; PF2, PF2'; ...; PFj, PFj') to a specific given robot (R1, R2, ..., Ri), only concerns a fractional strip (BF) of the considered headland portion, which is directly adjacent to the extremity of the considered work area (EB, EB').

5. Method according to any one of claims 1 to 4, **characterised in that** the temporary exclusive assignments of the headland portions (PF1, PF1'; PF2, PF2'; ...; PFj, PFj') to the various robots (R1, R2, ..., Ri) are performed progressively, as the work carried out by the robots proceeds in the work areas (Z1, Z2, ..., Zj) of the considered plot of land (P).

6. Method according to any one of claims 1 to 5, **characterised in that** it consists in assigning temporarily each work area (Z1, Z2, Zj) exclusively to one of the agricultural robots (R1, R2, Ri), at least during the considered work phase, the width (Lz) of most of the work areas (Z1, Z2, Zj) being advantageously greater than or equal to the working width (Lr) of the agricultural robot (R1, R2, Ri) exclusively assigned to it, preferably equal to an integer multiple of this working width, and **in that** the exclusive assignment, as work proceeds on the plot of land (P), of the work areas (Z1, Z2, Zj) still to be worked, to the various agricultural robots (R1, R2, Ri), is performed progressively, as the work being carried out in the various work areas is completed by the agricultural robots which have been respectively assigned to them.

7. Method according to claim 6, **characterised in that** all the work areas (Z1, Z2, Zj) are assigned to the various agricultural robots (R1, R2, Ri), with an exclusive assignment of one robot per area, before or when starting work on the plot of land (P), a possible reassignment of the work areas still to be worked between the various considered agricultural robots being able to take place, at a given time as work proceeds on the plot of land (P), depending on the behavioural change, availability and/or status of the various robots, or even on the actual or predictable progress of the work in the work areas still worked at the above-mentioned time by the respective robots which have been exclusively assigned to them.

8. Method according to any one of claims 1 to 7, **characterised in that** the subdivision of the plot of land (P) and the assignment of the exclusive work areas (Z1, Z2, Zj) to the various agricultural robots (R1, R2, Ri) take into account a minimisation of the crossing between the robots in the headland(s) (F) when changing work areas, the exclusive assignment of a given work area (Z1, Z2, Zj) to a specific robot (R1, R2, Ri) resulting either in an exclusive temporary assignment, or at least a priority reservation, for the specific robot of the headland portion(s) facing and extending in the continuation of one of the two extremities (EB and EB') of the work area in the form of strips (Z1, Z2, ..., Zj).

9. Agricultural machinery assembly for the automated work of plots of land (P) comprising a fleet of at least two mobile agricultural machines or robots (R1, R2, ..., Ri), equipped with suitable work tools, operating autonomously and independently, and a common central management and control system (SC) adapted to communicate with the robots to transmit them instructions and/or commands and receive in return information concerning the operation and/or status of the robots, each robot further being provided with a satellite positioning or tracking device, the central management and control system (SC) comprising means making it possible to subdivide the plot of land (P) to be worked, prior to starting working on this plot of land (P) and/or progressively as work proceeds thereon, into at least two distinct work areas (Z1, Z2, ..., Zj), the whole of the work areas covering substantially the entire surface of the plot of land, each work area (Z1, Z2, ..., Zj) consisting of a fraction of plot of land in the form of a strip having respective extremities (EB, EB') at the two opposite ends thereof, and a headland area (F, F') extending along the various successive adjacent extremities (EB or EB') at each of the two opposite ends of the strips (Z1, Z2, ..., Zj),
assembly **characterised in that** the common central management and control system (SC) further comprises means making it possible to subdivide each headland area (F, F') into headland portions (PF1, PF1'; PF2, PF2'; PFj, PFj'), each of which facing and being located in the continuation of one of the two extremities (EB and EB') of one of the strips forming work areas (Z1, Z2, ..., Zj), and to assign at least a fraction of a headland portion (PF1, PF1'; PF2, PF2'; PFj, PFj'), temporarily and exclusively, to the robot (R1, R2; ..., Ri) that either is about to pass or is in the process of passing through the considered headland portion (PF1, PF1'; PF2, PF2'; ...; PFj, PFj'), or is going to start, is in the process of completing or going to complete work in the work area (Z1, Z2, ..., Zj) associated with the considered headland portion (PF1, PF1'; PF2, PF2'; ...; PFj, PFj'),

10. Assembly according to claim 9, **characterised in that** it implements the method according to any one of claims 1 to 8 to manage the fleet of robots (R1, R2, Ri) when working a plot of land (P).
